# EUROPÄISCHE PATENTSCHRIFT

(11) **EP 3 457 009 B1**
(45) Veröffentlichungstag und Bekanntmachung des Hinweises auf die Patenterteilung: **17.01.2024**
(21) Anmeldenummer: 18194984.3
(22) Anmeldetag: 18.09.2018
(51) Int. Cl.: F16J 15/447, F01D 11/06

(54) **DAMPFTURBINE MIT WELLENDICHTUNGSANORDNUNG**
STEAM TURBINE WITH SHAFT SEAL
TURBINE À VAPEUR POURVUE DE DISPOSITIF DE JOINT D'ÉTANCHÉITÉ D'ARBRE

(30) Priorität: 19.09.2017 DE 102017216558
(43) Veröffentlichungstag der Anmeldung: 20.03.2019
(73) Patentinhaber: Siemens Energy Global GmbH & Co. KG, 81739 München (DE)
(72) Erfinder: LEIDINGER, Bernd, 01159 Dresden (DE)

(56) Entgegenhaltungen:
- EP-A2- 2 420 650
- EP-A2- 2 426 318
- WO-A1-01/38707
- DE-A1- 10 060 656
- DE-A1-102008 003 301
- US-A- 3 614 255

## Beschreibung

Die Erfindung betrifft eine Dampfturbine mit einer Dichtungsanordnung nach dem Oberbegriff des unabhängigen Patentanspruchs 1.

Bei Dampfturbinen muss der Spalt zwischen dem Turbinengehäuse und dem aus dem Turbinengehäuse hinausragenden Turbinenrotors abgedichtet werden, um zu verhindern, dass Dampf durch den Spalt entweichen kann. Hierzu wird eine Dichtung in den Spalt zwischen Turbinengehäuse und Turbinenrotor angeordnet. Die Dichtung kann den Spalt allerdings nicht vollständig abdichten, so dass immer ein gewisser Dampfmassenstrom durch den Spalt entweichen kann. Durch die Dampfreibung innerhalb der Dichtungsanordnung kommt es zu einer Temperaturerhöhung des zu dichtenden Mediums, wobei diese umso größer ist, je geringer bei sonst gleichen Bedingungen die Massenströme durch die Dichtung sind. Dies kann zu einer Gefährdung der Bauteile infolge zu hoher Bauteiltemperaturen führen. Besonders stark tritt dieser Effekt bei Dichtungen mit extrem niedrigen Leckagemassenströmen, wie beispielsweise Bürstendichtungen, die häufig bei Dampfturbinen zur Anwendung kommen, auf. Um unzulässig hohe Bauteiltemperaturen zu vermeiden, ist eine Reduzierung des Einsatzbereiches der Bauteile notwendig, oder es müssen Werkstoffe mit höherer Warmfestigkeit ausgewählt werden. Dies führt zu höheren Leckageverlusten und damit niedrigeren Wirkungsgraden bzw. oder zu einer Erhöhung der Bauteilkosten. Eine gattungsgemäße Dampfturbine mit Heißdampfeinleitung in einen Zwischenraum zwischen einer Bürstendichtung und einer stromabwärtigen Labyrinthdichtung ist bekannt aus DE10060656A1.

Ausgehend zum zuvor beschriebenen Problem ist es Aufgabe der vorliegenden Erfindung, eine Dampfturbine bereitzustellen, welche eine verbesserte Dichtungsanordnung aufweist, wodurch unzulässig hohe Bauteiltemperaturen vermeiden werden.

Die Aufgabe wird gelöst durch die Merkmale des unabhängigen Patentanspruchs 1.

Weitere Vorteile und Ausgestaltungen der Erfindung, die einzeln oder in Kombination miteinander verwendet werden können, sind Gegenstand der Unteransprüche.

Die erfindungsgemäße Dampfturbine mit wenigstens einem, einen ersten Druckraum bildenden Turbinengehäuse und einem durch das Turbinengehäuse hindurch in einen zweiten Druckraum ragenden Turbinenrotor, sowie mit einer Dichtungsanordnung zum Abdichten eines Spaltes zwischen einem ersten Druckraum und dem zweiten Druckraum, wobei der Druck P₁ im ersten Druckraum größer ist als der Druck P₂ im zweiten Druckraum, und wobei die Dichtungsanordnung wenigstens eine Bürstendichtung und eine in Durchströmungsrichtung der Dichtungsanordnung nachgeordnete, zum ersten Druckraum abgewandte Labyrinthdichtung aufweist, wobei zwischen der Bürstendichtunq und der Labyrinthdichtunq ein Zwischenraum ausgebildet ist,welcher durch die Bürstendichtunq und die Labyrinthdichtunq beqrenzt wird, zeichnet sich dadurch aus, eine Dampfleitung zwischen dem Beschaufelungsteil und dem Zwischenraum ausgebildet ist, über die entspannter Dampf dem Beschaufelungsteil stromabwärts der Dichtungsanordnung entnehmbar ist und dem Zwischenraum zwischen der Bürstendichtung und der Labyrinthdichtung zuführbar ist.

Die Erfindung macht sich den Sachverhalt zunutze, dass in einer Anordnung von Bürstendichtungen in Reihe mit üblichen Labyrinthdichtungen, welche als Backup dienen, der überwiegende Teil der Druckdifferenz P₁-P₂ auf die Bürste und nur ein kleiner Teil auf die Backup Labyrinthe entfällt. Durch Einleiten von entspannten und daher kühlerem Dampf aus dem Beschaufelungsteil stromabwärts der Dichtungsanordnung in den Zwischenraum zwischen der Bürstendichtung und der Labyrinthdichtung wird die Labyrinthdichtung mit dem kühleren Dampf durchströmt und dadurch gekühlt. Hierdurch können unzulässig hohe Bauteiltemperaturen an der Dichtungsanordnung wirkungsvoll verhindert werden. Durch das Einleiten des kühleren Dampfes in den Zwischenraum zwischen der Bürstendichtung und der Labyrinthdichtung treten zwar zusätzliche Leckageverluste auf, diese sind aber bei geeigneter Auslegung geringer, als sie ohne den Einsatz der Bürstendichtung und nur mittels Labyrinthdichtungen wären. Beim Ausfall der Bürstendichtung übernimmt die Labyrinthdichtung die Aufgabe der Abdichtung des Spaltes zwischen dem Turbinengehäuse und dem Turbinenrotor.

Eine Ausgestaltung der Erfindung sieht vor, dass der Dampf über ein im Beschaufelungsteil der Dampfturbine eingebrachte Sammelnut entnommen wird. Die Sammelnut lässt sich fertigungstechnisch einfach im Turbinengehäuse ausbilden und ermöglicht ein einfaches und strömungsgünstiges Abführen des Dampfes aus dem Beschaufelungsteil der Dampfturbine.

Eine weitere Ausgestaltung der Erfindung sieht vor, dass zwischen der Entnahme des Dampfes stromabwärts der Dichtungsanordnung und der Einleitung des Dampfes in den Zwischenraum zwischen der Bürstendichtung und der Labyrinthdichtung eine Rückschlagklappe und/oder ein Regelventil angeordnet ist. Wie bereits weiter oben beschrieben, muss beim Ausfall der Bürstendichtung die Labyrinthdichtung die Dichtungsaufgabe übernehmen. Um in diesem Fall eine Rückströmung des Dampfes in den Beschaufelungsteil zu vermeiden, muss in die Zuleitung ein Ventil eingebaut werden, das in diesem Fall geschlossen werden kann. Alternativ kann auch eine Rückschlagklappe oder eine Kombination aus Regelventil und Rückschlagklappe ausgebildet sein.

Nachfolgend werden die Erfindung sowie weitere Vorteile der Erfindung anhand eines Ausführungsbeispieles erläutert.

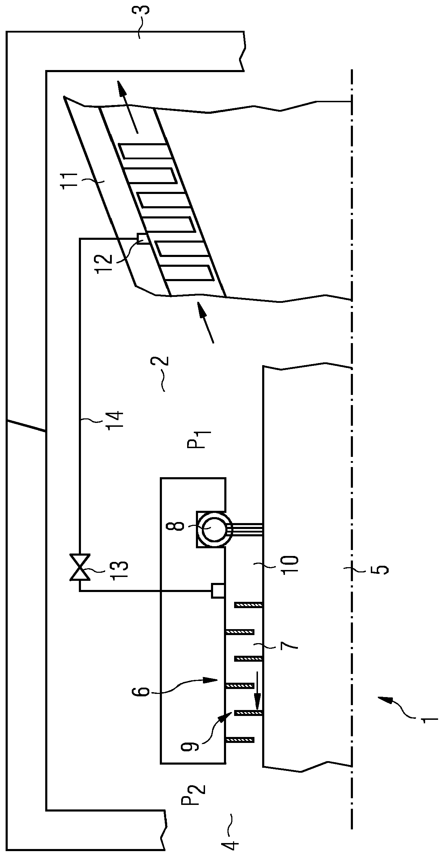

Die Abbildung stellt dabei nur eine Prinzipskizze dar, in der im Wesentlichen nur die zur Erfindung notwendigen Bauteile gezeigt werden. Die Abbildung zeigt keinesfalls eine maßstabsgetreue Ausbildung der Erfindung.

Die einzige Figur zeigt eine Dampfturbine 1 mit wenigstens einem, einem ersten Druckraum 2 bildenden Turbinengehäuse 3 und einem durch das Turbinengehäuse 3 hindurch in einen zweiten Druckraum 4 ragenden Turbinenrotor 5. Die Dampfturbine 1 weist eine Dichtungsanordnung 6 zum Abdichten eines Spaltes 7 zwischen dem ersten Druckraum 2 und dem zweiten Druckraum 4 auf. Der Druck P₁ im ersten Druckraum 2 ist dabei größer als der Druck P₂ im zweiten Druckraum 4. Die Dichtungsanordnung 6 umfasst eine Bürstendichtung 8 sowie eine in Durchströmungsrichtung der Dichtungsanordnung 6 nachgeordnete, zum ersten Druckraum 2 abgewandte Labyrinthdichtung 9. Stromabwärts der Dichtungsanordnung 6 wird Dampf aus dem Beschaufelungsteil (11), vorzugsweise über eine im Beschaufelungsteil 11 der Dampfturbine 1 eingebrachte Sammelnut 12, entnommen. Die Sammelnut 12 ist mit einer Dampfleitung 14 verbunden, über die der Dampf aus der Ringnut 12 in einen Zwischenraum 10 zwischen der Bürstendichtung 8 und der Labyrinthdichtung 9 eingeleitet wird. Da der Dampf im Bereich der Entnahme aus dem Beschaufelungsteil (11) bereits entspannt ist, weist er eine niedrigere Temperatur als unmittelbar vor der Bürstendichtung 8 auf. Der kühlere in den Zwischenraum eingeleitete Dampf durchströmt die Labyrinthdichtung 9 und kühlt sie dabei. Durch die Kühlung der Labyrinthdichtung 9 wird eine unzulässig hohe Bauteiltemperatur im Bereich der Dichtungsanordnung 6 verhindert. Im normalen Dampfturbinenbetrieb entfällt der überwiegende Teil der Druckdifferenz P₁-P₂ auf die Bürstendichtung 8 und nur ein kleiner Teil der Druckdifferenz auf die als Backup ausgebildete Labyrinthdichtung 9. Bei einem Ausfall der Bürstendichtung 8 übernimmt die Labyrinthdichtung 9 die gesamte Dichtungsaufgabe. Um in diesem Fall eine Rückströmung des Dampfes über die Dampfleitung 14 zu vermeiden, wird in die Dampfleitung 14 ein Regelventil 13 angeordnet. Alternativ kann auch eine Rückschlagklappe oder eine Kombination aus Regelventil und Rückschlagklappe ausgebildet werden.

Zusammenfassend kann festgestellt werden, dass durch die erfindungsgemäße Dampfturbine eine unzulässige Temperaturerhöhung im Bereich der Dichtungsanordnung, in Folge von Dampfreibung, wirkungsvoll verhindert werden kann. Hierdurch kann der Einsatzbereich der Bauteile zu höheren Temperaturen hin verschoben werden, ohne dass teurere Werkstoffe mit höherer Warmfestigkeit eingesetzt werden müssen.

## Patentansprüche

1. Dampfturbine (1) mit wenigstens einem, einen ersten Druckraum (2) bildenden, Turbinengehäuse (3) und einem durch das Turbinengehäuse (3) hindurch in einen zweiten Druckraum (4) ragenden Turbinenrotor (5), sowie mit einer Dichtungsanordnung (6) zum Abdichten eines Spaltes (7) zwischen dem ersten Druckraum (2) und dem zweiten Druckraum (4), wobei der Druck P1 im ersten Druckraum (2) größer ist als der Druck P2 im zweiten Druckraum (4) und wobei die Dichtungsanordnung (6) wenigstens eine Bürstendichtung (8) und eine in Durchströmungsrichtung der Dichtungsanordnung (6) nachgeordnete, zum ersten Druckraum (2) abgewandte Labyrinthdichtung (9) aufweist, wobei zwischen der Bürstendichtunq und der Labyrinthdichtung ein Zwischenraum ausgebildet ist,welcher durch die Bürstendichtunq und die Labyrinthdichtung beqrenzt wird,
**dadurch gekennzeichnet, dass**
eine Dampfleitung (14) zwischen einem Beschaufelungsteil (11) und dem Zwischenraum (10)ausgebildet ist, über die dem Beschaufelungsteil (11), entspannter Dampf entnehmbar ist und dem Zwischenraum (10) zwischen der Bürstendichtung (8) und der Labyrinthdichtung (9) zuführbar ist.

2. Dampfturbine (1) nach Anspruch 1,
**dadurch gekennzeichnet, dass**
der Dampf über eine im Beschaufelungsteil (11) der Dampfturbine (1) eingebrachte Sammelnut (12) entnehmbar ist.

3. Dampfturbine (1) nach Anspruch 1 oder 2,
**dadurch gekennzeichnet, dass**
in der Dampfleitung (14) eine Rückschlagklappe und/oder ein Regelventil (13) angeordnet ist.

## Claims

1. Steam turbine (1) having at least one turbine housing (3), which forms a first pressure space (2), and one turbine rotor (5), which projects into a second pressure space (4) through the turbine housing (3), and also having a seal arrangement (6) for sealing off a gap (7) between the first pressure space (2) and the second pressure space (4), wherein the pressure P1 in the first pressure space (2) is higher than the pressure P2 in the second pressure space (4), and wherein the seal arrangement (6) has at least one brush seal (8) and one labyrinth seal (9), arranged downstream in the throughflow direction of the seal arrangement (6), which is remote from the first pressure space (2), wherein, between the brush seal and the labyrinth seal, there is formed an intermediate space which is delimited by the brush seal and the labyrinth seal,
**characterized in that**
a steam line (14) is formed between a blade-arrangement part (11) and the intermediate space (10), via which steam line expanded steam is able to be removed from the blade-arrangement part (11) and is able to be fed to the intermediate space (10) between the brush seal (8) and the labyrinth seal (9).

2. Steam turbine (1) according to Claim 1,
**characterized in that**
the steam is able to be removed via a collecting groove (12) formed in the blade-arrangement part (11) of the steam turbine (1).

3. Steam turbine (1) according to Claim 1 or 2,
**characterized in that**
a check valve and/or a control valve (13) is arranged in the steam line (14).

## Revendications

1. Turbine (1) à vapeur comprenant au moins une enveloppe (3) de turbine, formant un premier espace (2) sous pression, et un rotor (5) de turbine, pénétrant, en traversant l'enveloppe (3) de la turbine, dans un deuxième espace (4) sous pression, ainsi qu'un dispositif (6) d'étanchéité pour rendre étanche un intervalle (7) entre le premier espace (2) sous pression et le deuxième espace (4) sous pression, dans laquelle la pression P1, dans le premier espace (2) sous pression, est plus haute que la pression P2, dans le deuxième espace (4) sous pression, et dans laquelle le dispositif (6) d'étanchéité a au moins une étanchéité (8) à brosse et une étanchéité (9) à labyrinthe, en aval dans le sens d'écoulement du dispositif (6) d'étanchéité et non tournée vers le premier espace (2) sous pression, dans laquelle il est constitué, entre l'étanchéité à brosse et l'étanchéité à labyrinthe, un espace intermédiaire, qui est délimité par l'étanchéité à brosse et l'étanchéité à labyrinthe,
**caractérisée en ce qu'**
il est constitué, entre une partie (11) d'aubage et l'espace (10) intermédiaire, un conduit (14) pour de la vapeur, par lequel de la vapeur détendue peut être prélevée de la partie (11) d'aubage et peut être envoyée à l'espace (10) intermédiaire entre l'étanchéité (8) à brosse et l'étanchéité (9) à labyrinthe.

2. Turbine (1) à vapeur suivant la revendication 1,
**caractérisée en ce que**
la vapeur peut être prélevée par une rainure (12) de collecte, ménagée dans la partie (11) d'aubage de la turbine (1) à vapeur.

3. Turbine (1) à vapeur suivant la revendication 1 ou 2,
**caractérisée en ce qu'**
un clapet antiretour et/ou une soupape (13) de réglage est monté dans le conduit (14) pour de la vapeur.
